# EUROPÄISCHE PATENTANMELDUNG

(11) **EP 1 882 507 A1**
(43) Veröffentlichungstag der Anmeldung: **30.01.2008**
(21) Anmeldenummer: 07112917.5
(22) Anmeldetag: 23.07.2007
(51) Int. Cl.: B01D 15/08, B01J 41/12, C01G 43/00

(54) **Ionenaustauscher zur Gewinnung von Wertmetallen**

(30) Priorität: 24.07.2006 DE 102006034659
(71) Anmelder: LANXESS Deutschland GmbH, 51369 Leverkusen (DE)
(72) Erfinder: Rossoni, Duilio, 40764 Langenfeld (DE); Klipper, Reinhold, 50933 Köln (DE); Wagner, Rudolf, 51061 Köln (DE); Wambach, Wolfgang, 51065 Köln (DE); Schelhaas, Michael, 50733 Köln (DE)

(57) **Zusammenfassung**

Die vorliegende Erfindung betrifft die Verwendung von monodispersen, makroporösen Anionenaustauschern vom Typ I oder vom Typ II in IIydrometallurgieprozessen zur Gewinnung von Wertmetallen.

## Beschreibung

Die vorliegende Erfindung betrifft die Verwendung von monodispersen, makroporösen Anionenaustauschern vom Typ I oder vom Typ II in Hydrometallurgieprozessen zur Gewinnung von Wertmetallen. Typ I steht für Harze, deren adsorbierende Zentren quaternäre Ammoniumgruppen sind die durch Alkylgruppen substituiert sind. Typ II steht für Harze, worin die quaternären Ammoniumgruppen neben Alyklgruppe(n) mindestens eine Hydroxyalkylgruppe aufweisen.

Durch die zunehmende Industrialisierung in vielen Teilen der Welt und die Globalisierung hat die Nachfrage nach zahlreichen Wertmetallen wie beispielsweise Cobalt, Nickel, Zink, Mangan, Kupfer, Gold, Silber aber auch Uran in den letzten Jahren erheblich zugenommen. Diese zunehmende Nachfrage versuchen die Minengesellschaften und Produzenten von Industriemetallen mit verschiedenen Maßnahmen zu befriedigen. Dazu gehört auch die Verbesserung der Produktionsverfahren selber.

Die für die industrielle Verwendung relevanten Wertmetalle liegen in Erzgesteinen vor, die bergmännisch abgebaut werden. Das darauf hin in größeren Brocken vorliegende Erz wird in kleine Partikel gemahlen. Aus diesen Gesteinspartikeln können nach mehreren Verfahren die Wertstoffe herausgelöst werden. Die gängige Technik ist die Hydrometallurgie, auch als Nassmetallurgie bezeichnet. Gegebenenfalls werden nach einer Vorbehandlung der Erze zum Erzeugen löslicher Verbindungen (Rösten, pyrogener Aufschluss) diese mit Hilfe von Säuren oder Laugen in wässrige Metallsalzlösungen überführt. Die Wahl des Lösungsmittels wird dabei bestimmt von der Art des Metalls, seiner im Erz vorliegenden Bindung, der Art der Erzbegleiter (Gangart) und dem Preis. Das am meisten angewandte Lösungsmittel ist Schwefelsäure, daneben kommen Salzsäure, Salpetersäure und heiße konzentrierte Kochsalzlösungen in Betracht. Für Erze mit säurelöslichen Begleitstoffen, wie beispielsweise Kupfer, können auch ammoniakalische Lösungen verwendet werden, teilweise auch bei hohem Druck und erhöhter Temperatur (Drucklaugung). Natronlauge wird eingesetzt für die Gewinnung von Aluminiumoxid, bei Edelmetallen werden Alkalicyanidlösungen verwendet. Alternativ kann die Gewinnung der Metalle in der Hydrometallurgie durch Ausfällung bzw. Verdrängung mittels eines unedleren Metalls (Zementation), durch Reduktion mit Wasserstoff oder Kohlenmonoxid bei hohem Druck (Druckfällung) oder durch Elektrolyse mit Hilfe unlöslicher Elektroden oder durch Kristallisation (Sulfate des Kupfers, des Zinks, des Nickels oder des Thalliums) durch Überführung (Fällung) in schwerlösliche Verbindungen wie Hydroxide, Carbonate oder basische Salze mittels Kreide, Kalkmilch oder Sodalösung erfolgen.

In US 6,350,420 wird beispielsweise die Behandlung der Erzpartikel mit Mineralsäuren wie Schwefelsäure bei hohen Temperaturen (z.B. 250 - 270 °C) unter Druck (high pressure leaching) beschrieben. Man erhält eine Suspension (Slurry) der feinen Erzpartikel in Schwefelsäure, worin die heraus gelösten Metalle in Form ihrer Salze in mehr oder weniger konzentrierter Form enthalten sind.

Alternativ kann das Herauslösen der Metalle aus dem Gestein auch nach anderen Methoden erfolgen. Die Art des eingesetzten Verfahrens hängt von mehreren Faktoren ab, so vom Gehalt des Erzes an Metallen, von der Partikelgröße zu der das gebrochene Erz gemahlen wurde oder von apparativen Bedingungen um nur einige zu nennen.

Beim sogenannten Heap Leach Verfahren werden relativ grobe Erzpartikel mit niedrigem Metallgehalt eingesetzt.

Beim Agitation Leach Verfahren werden feinere Erzpartikel (ca. 200 µm) mit hohen Gehalten an Metallen im Leach Prozess eingesetzt.

Benutzt wird aber auch das atmosphärische Leach Verfahren oder das Biooxidations Verfahren zum Lösen der Metalle aus dem Erz. Diese Verfahren werden z.B. in der US 6,350,420 zitiert.

Die Größe der bei diesen Verfahren einzusetzenden gemahlenen Erzpartikel liegt im Bereich von ca. 30 - ca. 250 µm. Wegen der Kleinheit der Partikel und der großen Gesteinsmenge ist eine klassische Filtration der Partikel von der flüssigen Phase über Nutschen sehr kostenaufwendig. Technisch angewandt wird zumeist eine Abtrennung nach dem Gravitationsprinzip in Dekantern durch Absetzen der festen Phase in sehr großen Rührwerksbehältern. Um eine gute Trennung mit einer möglichst partikelfreien Wertstofflösung zu erhalten werden Rührbehälter mit einem Durchmesser von 50 Metern und mehr eingesetzt und hiervon mehrere in Serie. Große Wassermengen werden benötigt, die sehr teuer sind, da viele Minen in wasserarmen Gebieten (Wüsten) liegen. Zudem müssen zur besseren Abtrennung der Partikel oft Filtrationsmittel, die teuer und umweltbelastend sind, eingesetzt werden.

Bei hydrometallurgischen Anlagen und Minen, die in großer Zahl weltweit zur Gewinnung von Wertstoffen wie Gold, Silber, Nickel, Cobalt, Zink u.a. Wertmetallen betrieben werden, stellen die Verfahrensschritte der Filtration und Klärung einen hohen Anteil der Kapitalkosten der Anlage und der laufenden operativen Kosten dar.

Daher werden große Anstrengungen unternommen, die genannten teuren Verfahrenschritte durch andere weniger kapitalintensive Verfahren zu ersetzen. Neue Verfahren dieser Art sind Carbon in Pulp Verfahren für Silber und Gold und der Resin in Pulp (R.I.P.) Prozess für Gold, Cobalt, Nickel, Mangan.

Beispielsweise wird in US 6,350,420 ein R.I.P. Prozess zur Gewinnung von Nickel und Cobalt beschrieben. Ein Nickel-haltiges Erz wird mit Mineralsäuren behandelt um damit die Wertstoffe herauszulösen. Die durch die Säurebehandlung erhaltene Suspension wird mit Ionenaustauschern versetzt, die selektiv Nickel und Cobalt adsorbieren. Die beladenen Ionenaustauscher werden von der Suspension durch Sieben abgetrennt.

Als Ionenaustauscher werden in US 6,350,420 Harze eingesetzt, die in den US 4,098,867 und US 5,141,965 beschrieben sind. Geeignete Harze sind demnach Rohm & Haas IR 904, ein stark basischer makroporöser Anionenaustauscher, Amberlite XE 318, Dow XFS-43084, Dow XFS-4195 und Dow XFS-4196.

Die in US 4,098,867 und US 5,141,965 beschriebenen Ionenaustauscher enthalten unterschiedlich substituierte Aminopyridin-, insbesondere 2-Picolylamin-Gruppen. Alle dort beschriebenen Ionenaustauscher zeigen eine heterodisperse Perldurchmesser- Verteilung. In US 5,141,965 zeigen die Ionenaustauscher Perldurchmesser im Bereich 0,1 - 1,5 mm, bevorzugt 0,15 - 0,7 mm am meisten bevorzugt 0,2 - 0,6 mm. Die in der US 4,098,867 beschriebenen Ionenaustauscher zeigen Perldurchmesser zwischen 20 - 50 mesh (0,3 mm - 0,850 mm), bzw. größere Durchmesser.

Rohm & Haas IR 904, ein stark basischer makroporöser Anionenaustauscher sowie Amberlite XE 318 sind ebenfalls heterodisperse Ionenaustauscher mit Perldurchmessern im Bereich von 0,3 - 1,2 mm. In den Beispielen werden zum Abtrennen der beladenen Ionenaustauscher von den Gesteinspartikeln und der ausgelaugten Lösung Siebe mit Maschenweiten von 30 bzw. 50 mesh eingesetzt (= 300 bis 600 µ Maschenweite).

Im Falle von Uran als Wertstoff erfolgt dessen Abbau bergmännisch im Tagebau oder untertägig. Untertägig kommen mechanischer Abbau und, bei Erzen mit geringem Urangehalt, in-situ-leach (auch in-situ-Laugung) zum Einsatz. Das im Erz vorhandene Uran wird durch physikalische und chemische Verfahren vom übrigen Gestein getrennt (aufgeschossen). Dazu wird das Erz zerkleinert (gebrochen, fein gemahlen) und das Uran herausgelöst (ausgelaugt). Dies geschieht mit Säure oder Lauge unter Hinzufügung eines Oxidationsmittels, um das Uran vom sehr schlecht löslichen chemisch 4-wertigen Zustand in die gut lösliche 6-wertige Form zu überführen. Auf diese Weise lassen sich bis zu 90 Prozent des im Erz befindlichen Urans gewinnen (siehe www.nic.com.an/nip.htm).

Unerwünschte Begleitstoffe werden aus der gewonnenen Aufschlämmung/Lösung in mehreren Reinigungsschritten durch Dekantieren, Filtern, Extrahieren usw. entfernt.

Aus der gereinigten Lösung werden die Uranylionen mit Anionenaustauschern entfernt.

Aus der Offenlegungsschrift DE 26 27 540 (= US 4 233 272) ist ein Verfahren zur selektiven Trennung von Uran mittels eines Ionenaustauschers aus sauren Lösungen bekannt, die zusätzlich Nickel, Eisen, Arsen, Aluminium und Magnesium enthalten. Zum Einsatz kommt dabei ein chelatbildender Kationenaustauscher, wobei mit 8 bis 12 %-iger Schwefelsäure sowohl Uranyl UO₂²⁺als auch U⁴⁺ Ionen abgetrennt werden.

US-A 4,430,308 beschreibt einen Prozess zur Gewinnung von Uran mittels eines beheizten Ionenaustauschers wofür sogenannte Typ II Harze eingesetzt werden können, beispielsweise Duolite 102 D^{®}, Ionac A-550^{®}, Ionac A-651^{®}, IRA 410^{®}, IRA 910^{®} aber auch Dowex 2^{®}. In allen Fällen handelt es sich um heterodisperse, gelförmige oder makroporöse Ionenaustauscher auf Styrol-Basis mit Divinylbenzol als Vernetzer.

DD 245 592 A1 beschreibt ein Verfahren zur Entfernung von Uran mittels Anionenaustauscher, dadurch gekennzeichnet, dass heterodisperse Anionenaustauscher eingesetzt werden, die durch Umsetzung von vernetzten Acrylsäurealkylestercopolymeren mit Polyaminen hergestellt werden.

DD 245 368 A1 betrifft ein Verfahren zum Abtrennen und Ausbringen von Uran, insbesondere in Form seiner Uransulfatokomplexe mittels heterodisperser Ionenaustauscher, die durch (Methyl)-acrylsäureester-Copolymere mit Polyaminen aus der Reihe der Hydroxyethylpolyethylenpolyamine hergestellt werden. Bekannt ist weiterhin aus der DD 261 962 A1 ein Verfahren zur Herstellung von heterodispersen Ionenaustauschern mit Amino- und ortho-Hydroxyoximgruppen. In Beispiel 1c dieser Druckschrift liegt Uran in Form anionischer Uranylsulfatokomplexe vor und wird an einen heterodispersen Anionenaustauscher, der nach dem genannten Verfahren hergestellt worden ist, gebunden.

DE 10121 163 A1 beschreibt ein Verfahren zur Herstellung von heterodispersen Chelataustauschern, die chelatisierende Gruppen der Formel -(CH)ₙNR₁R₂ enthalten und zur Entfernung von Schwer- oder Edelmetallen, wie etwa Uran, verwendet werden. Aus der Patentschrift DE 34 28 878 C2 ist ein Verfahren zur Rückgewinnung von Uran in einem extraktiven Wiederaufarbeitungsprozess für bestrahlte Kernbrennstoffe bekannt. Bei diesem Prozess werden basische heterodisperse Anionenaustauscher aus Polyalkylen-epoxypolyamin mit tertiären und quaternären Aminogruppen des chemischen Aufbaus R-NH⁺(CH₃)₂Cl⁻ und R-NH⁺ (CH₃)₂(C₂H₄OH)Cl⁻ verwendet.

Nachteilig an dem im Stand der Technik für die Gewinnung von Uran aber auch der für die Gewinnung von Cobalt oder Nickel eingesetzten Ionenaustauscher ist die ungleichmäßige Beladung der Ionenaustauscher mit Uranyl-Ionen, wodurch es zu erheblichen Verlusten kommt. Aufgrund der einzusetzenden Ionenaustauscher kommt es bei der Abtrennung der beladenen Ionenaustauscherperlen über ein Sieb zu weiteren Produktverlusten, weil ein Teil der Perlen wegen ihres kleinen Durchmessers durch das Sieb verloren geht. Die Folge sind sowohl Verluste an Wertmetall wie beispielsweise Uran als auch an Ionenaustauscherperlen. Ferner ist das Auswaschen aus dem Aufschlussprozess übrig gebliebener feiner Erzpartikel aus den feinen Perlen sehr zeitaufwändig und erfordert hohe Wassermengen. Schließlich verursachen die gemäß dem Stand der Technik einzusetzenden Ionenaustauscher hohe Druckverluste und es treten wegen der ungleichmäßigen Beladung der Ionenaustauscherperlen bei der Elution des Wertmetall von den Perlen breite Mischzonen in den Eluaten auf, die für die weitere Urangewinnung ungünstig sind.

Die Lösung der Aufgabe und somit Gegenstand der vorliegenden Erfindung ist die Verwendung monodisperser, makroporöser, mittelbasischer oder starkbasischer Anionenaustauscher vom Typ I oder Typ II bei der Gewinnung von Wertmetallen.

Bevorzugt werden die erfindungsgemäß einzusetzenden monodispersen Anionenaustauscher in Hydrometallurgieprozessen, besonders bevorzugt in sogenannten Resin in Pulp Prozessen (R.I.P.-Prozessen) oder in in-situ-leach Prozessen oder zur Aufarbeitung Wertmetall-haltiger Wässer eingesetzt.

Die Erfindung betrifft deshalb auch Verfahren zur Gewinnung von Wertmetallen aus Hydrometallurgieprozessen, bevorzugt in R.I.P. Prozessen oder in-situ-leach Prozessen oder zur Aufarbeitung Wertmetall-haltiger Wässer, dadurch gekennzeichnet, dass monodisperse, makroporöse mittelbasische oder starkbasische Anionenaustauscher vom Typ I oder Typ II, bevorzugt vom Typ II, eingesetzt werden.

Gegenüber den im Stand der Technik verwendeten Ionenaustauschern zeigen die erfindungsgemäß einzusetzenden monodispersen, makroporösen, mittelbasischen oder starkbasischen Anionenaustauscher vom Typ-I oder Typ-II überraschenderweise deutlich höhere Adsorptionsraten der Wertmetalle, insbesondere für Uran, niedrige Druckverluste, weisen geringe Mischzonen auf und erfordern deutlich geringere Wassermengen.

In einer besonders bevorzugten Ausführungsform dienen die erfindungsgemäß einzusetzenden monodispersen, makroporösen mittelbasischen oder starkbasischen Anionenaustauscher vom Typ I oder Typ II zur Adsorption von Uran aus wässrigen Lösungen in die es durch starke Säuren ausgelaugt wurde. Ausgelaugt durch starke Säuren oder mittels konzentrierte Sodalösungen liegt das Uran bevorzugt als Uranylion (UO₂²⁺) vor, besonders bevorzugt als Uranylchlorid, Uranylphosphat, Uranylacetat, Uranylcarbonat, Uranylsulfat oder Uranylnitrat, wovon das Uranylsulfat, erhältlich durch Auslaugung des Uran-haltigen Gesteins mit Schwefelsäure, insbesondere bevorzugt vorliegt.

Die Erfindung betrifft deshalb besonders bevorzugt die Verwendung monodisperser, makroporöser mittelbasischer oder starkbasischer Anionenaustauscher vom Typ I oder Typ II, insbesondere vom Typ II, zur Adsorption von Uranylionen aus den Salzen des Urans mit starken Säuren oder mit Soda, insbesondere bevorzugt aus Uranylsulfat oder Uranylcarbonat.

Die Herstellung monodisperser Ionenaustauscher ist dem Fachmann bekannt. Man unterscheidet neben der Fraktionierung heterodisperser Ionenaustauscher durch Siebung im Wesentlichen zwei Direktherstellungsverfahren nämlich das Verdüsen oder Jetting und das Seed-Feed Verfahren beim Herstellen der Vorstufen, den monodispersen Perlpolymerisaten. Im Falle des Seed-Feed-Verfahrens wird ein monodisperser Feed eingesetzt, der seinerseits beispielsweise durch Siebung oder durch Jetting erzeugt werden kann.

Als monodispers werden in der vorliegenden Anmeldung solche Stoffe bezeichnet, bei denen der Gleichheitskoeffizient der Verteilungskurve kleiner oder gleich 1,2 ist. Als Gleichheitskoeffizient wird der Quotient aus den Größen d60 und d 10 bezeichnet. D 60 beschreibt den Durchmesser, bei welchem 60 Masssen-% die in der Verteilungskurve kleiner und 40 Massen-% größer oder gleich sind.D 10 bezeichnet den Durchmesser, bei welchem 10 Massen-% in der Verteilungskurve kleiner und 90 Massen-% größer oder gleich sind.

Das monodisperse Perlpolymerisat, die Vorstufe des Ionenaustauschers, kann beispielsweise hergestellt werden, indem man monodisperse, gegebenenfalls verkapselte Monomertropfen bestehend aus einer monovinylaromatischen Verbindung, einer polyvinylaromatischen Verbindung sowie einem Initiator oder Initiatorgemisch und im Falle der vorliegenden Erfindung mit einem Porogen in wässriger Suspension zur Reaktion bringt. Um makroporöse Perlpolymerisate für die Herstellung makroporöser Ionenaustauscher zu erhalten, ist die Anwesenheit von Porogen zwingend erforderlich. Vor der Polymerisation wird das gegebenenfalls verkapselte Monomertröpfchen mit einer (Meth)acrylverbindung dotiert und anschließend polymerisiert. In einer bevorzugten Ausführungsform der vorliegenden Erfindung kommen deshalb für die Synthese des monodispersen Perlpolymerisats mikroverkapselte Monomertröpfchen zum Einsatz. Dem Fachmann sind die verschiedenen Herstellverfahren monodisperser Perlpolymerisate sowohl nach dem Jetting Prinzip als auch nach dem Seed-Feed Prinzip aus dem Stand der Technik bekannt. An dieser Stelle sei verwiesen auf US-A 4,444 961, EP-A 0 046 535, US-A 4,419,245 und WO 93/12167.

Die Funktionalisierung der nach dem Stand der Technik erhältlichen monodispersen Perlpolymerisate zu monodispersen, makroporösen Anionenaustauschern vom Typ I oder Typ II ist dem Fachmann ebenfalls aus dem Stand der Technik bekannt.

So beschreibt EP-A 1 078 688 die Herstellung monodisperser makroporöser Anionenaustauscher nach dem Phthalimidverfahren, indem man
a) Monomertröpfchen aus mindestens einer monovinylaromatischen Verbindung und mindestens einer polyvinylaromatischen Verbindung sowie im Falle der vorliegenden Anmeldung mit einem Porogen und/oder gegebenenfalls einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umsetzt und
d) schließlich das aminomethylierte Perlpolymerisat alkyliert.

Im Gegensatz zu dieser Ether/Oleum-Variante ist aus EP-A 0 046 535 die Herstellung monodisperser makroporöser Anionenaustauscher nach dem Phthalimidverfahren mit der Estervariante bekannt. Hierbei wird das verkapselte Perlpolymeriat aus makroporösem, mit Divinylbenzol vernetztem Polystyrol ohne vorheriges Entfernen der Kapselwand nach dem in US-PS 3,989,650 beschriebenen Verfahren durch Amidomethylierung mit Essigsäurephthalimidomethylester, alkalische Verseifung und Quaternierung mit Chlormethan zu einem stark basischen Anionenaustauscher überführt.

In einer alternativen Ausführungsform können die erfindungsgemäß einzusetzenden monodispersen makroporösen Anionenaustauscher auch nach dem in EP 0 O51 210 B2 beschriebenen Chlormethylierungsverfahren hergestellt werden, wobei die Perlpolymerisate mit Chlormethylmethylether haloalkyliert werden und das haloalkylierte Polymer mit Ammoniak oder primären Aminen wie Methylamin oder Ethylamin oder einem sekundären Amin wie beispielsweise Dimethylamin bei Temperaturen von 25°C bis 150°C umsetzt.

Durch diese drei Varianten lassen sich die erfindungsgemäß einzusetzenden monodispersen makroporösen Anionenaustauscher vom Typ I oder Typ II synthetisieren.

Die für die erfindungsgemäß einzusetzenden Anionenaustauscher erforderliche Makroporösität erhält man wie bereits oben dargestellt durch Einsatz von Porogen während der Herstellung der Perlpolymerisat Vorstufe. Als Porogen sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol und deren Isomeren genannt. Porogene sind als vor allem organische Substanzen, die sich im Monomeren lösen, das Polymerisat aber schlecht lösen bzw. quellen (Fällmittel für Polymere) beispielsweise auch aliphatische Kohlenwasserstoffe (Farbenfabriken Bayer DBP 1045102, 1957; DBP 1113570, 1957).

Alternativ zu den aliphatischen Kohlenwasserstoffen können aber auch gemäß US-A 4 382 124 als Porogen Alkohole mit 4 bis 10 Kohlenstoffatomen zur Herstellung monodisperser, makroporöser Perlpolymerisate auf Styrol/Divinylbenzol-Basis eingesetzt werden. Ferner wird dort eine Übersicht der Herstellmethoden makroporöser Perlpolymerisate gegeben.

Die Unterscheidung in Typ I und Typ II Anionenaustauscher wird bereits in US-A 4,430,308 beschrieben. Typ I Harze bedeuten erfindungsgemäß Harze deren adsorbierende Zentren quaternäre Ammoniumgruppen sind, die durch Alkylgruppen, bevorzugt durch C₁ bis C₄-Alkylgruppen, besonders bevorzugt durch Methylgruppen, substituiert sind.

Im Gegensatz dazu unterscheidet man die Typ II Harze, worin die quaternären Ammoniumgruppen neben Alkylgruppe(n) auch mindestens eine Hydroxyalkylgruppe, bevorzugt Hydroxy-C₁-C₄-alkylgruppe, aufweisen. Bevorzugt handelt es sich bei den Typ II Harzen um Methylenhydroxyalkyldimethylammonium Gruppen als funktionelle Gruppe, worin die Hydroxylalkyl-Gruppe ein oder zwei C-Atome aufweist. Die erfindungsgemäß bevorzugt einzusetzenden Typ II Anionenaustauscher können nach den oben beschriebenen drei Varianten hergestellt werden, wobei als Amin tertiäre Amine, bevorzugt Dimethylethanolamin oder Dimethylmethanolamin, eingesetzt werden.

Erfindungsgemäß durch die monodispersen, makroporösen Aninonaustauscher zu isolierende Wertmetalle sind bevorzugt Metalle der III. bis VI. Hauptgruppe sowie der 5. bis 12. Nebengruppe des Periodensystems der Elemente. Bevorzugt lassen sich Quecksilber, Eisen, Titan, Chrom, Zinn, Blei, Cobalt, Nickel, Kupfer, Zink, Cadmium, Mangan, Uran, Wismuth, Vanadium, die Elemente der Platingruppe Ruthenium, Osmium, Iridium, Rhodium, Palladium, Platin sowie die Edelmetalle Gold und Silber gewinnen. Erfindungsgemäß besonders bevorzugt werden die monodispersen, makroporösen Anionenaustauscher zur Gewinnung von Uran eingesetzt.

Bevorzugte Anwendungsverfahren für den Einsatz der erfindungsgemäß einzusetzenden monodispersen, makroporösen Anionenaustauscher sind Resin in Pulp Prozesse oder in-situ-leach Prozesse, besonders bevorzugt in-situ-leach Prozesse oder auch die Aufarbeitung jeglicher Wertmetall-haltiger Wässer.

Der Einsatz der erfindungsgemäß einzusetzenden monodispersen, makroporösen Anionenaustauscher erfolgt dabei in entsprechenden Anlagen der Explorationsfirmen. Im Falle der erfindungsgemäß besonders bevorzugten Gewinnung von Uran bieten die Seiten http://www.uraniumsa.org/processing/insitu.leaching.htm, http://www.nrc.gov/materials/fuel-cycle-fac/ur-milling.htm oder IAEA-TECDOC-1239, "Manual of acid in situ leach uranium mining technology" der IAEA (International Atomic Energy Agency) von August 2001 Beispiele möglicher apparativer Gestaltungen bereits bestehender Minen, die nach dem in-situ-leach Verfahren arbeiten.

Überraschenderweise zeigen, wie bereits oben dargestellt, die erfindungsgemäß einzusetzenden monodispersen, makroporösen Anionenaustauscher vom Typ I oder Typ II, insbesondere vom Typ II, eine gegenüber dem Stand der Technik deutlich erhöhte Adsorptionsrate für die oben genannten Wertmetalle, insbesondere zur Gewinnung von Uran aus in-situ-leach Prozessen.

### Beispiele

### Beispiel 1

### a) Herstellung des monodispersen, makroporösen Perlpolymerisates auf der Basis von Styrol, Divinylbenzol und Ethylstyrol

In einem 101 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung des amidomethylierten Perlpolymerisates

Bei Raumtemperatur werden 2400 ml Dichlorethan, 595 g Phthalimid und 413 g 30,0 gew.-%iges Formalin vorgelegt.Der pH Wert der Suspension wird mit Natronlauge auf 5,5 bis 6 eingestellt. Anschließend wird das Wasser destillativ entfernt. Dann werden 43,6 g Schwefelsäure zudosiert. Das entstehende Wasser wird destillativ entfernt. Der Ansatz wird abgekühlt. Bei 30°C wird 174,4 g 65 %iges Oleum zudosiert, anschließend 300,0 g monodisperses Perlpolymerisat gemäß Verfahrensschritt 1a). Die Suspension wird auf 70°C erhitzt und weitere 6 Stunden bei dieser Temperatur gerührt. Die Reaktionsbrühe wird abgezogen, vollentsalztes Wasser wird zudosiert und Restmengen an Dichlorethan werden destillativ entfernt.
Ausbeute an amidomethyliertem Perlpolymerisat : 1820 ml
Elementaranalytische Zusammensetzung: Kohlenstoff : 75,3 Gew.-%; Wasserstoff: 4,6 Gew.-%; Stickstoff: 5,75 Gew.-%;

### 1c) Herstellung des aminomethylierten Perlpolymerisates

Zu 1770 ml amidomethyliertem Perlpolymerisat aus Beispiel 1b) werden 851 g 50 gew.-%ige Natronlauge und 1470 ml vollentsalztes Wasser bei Raumtemperatur hinzudosiert. Die Suspension wird auf 180°C erhitzt und 8 Stunden bei dieser Temperatur gerührt.

Das erhaltene Perlpolymerisat wird mit vollentsalztem Wasser gewaschen.
Ausbeute an aminomethyliertem Perlpolymerisat : 1530 ml
Als Gesamtausbeute - hochgerechnet - ergeben sich 1573 ml
Elementaranalytische Zusammensetzung: Kohlenstoff: 78,2 Gew.-%; Stickstoff: 12,25 Gew.-%; Wasserstoff: 8,4 Gew.-% .
Menge an Aminomethylgruppen in mol pro Liter aminomethyliertem Perlpolymerisat: 2,13
Menge an Aminomethylgruppen in mol in der Gesamtausbeute von aminomethyliertem Perlpolymerisat: 3,259
Im statistischen Mittel wurden pro aromatischem Kern, - herrührend aus den Styrol und Divinylbenzoleinheiten - 1,3 Wasserstoffatome durch Aminomethylgruppen substituiert -.

### 1d) Herstellung eines monodispersen, makroporösen Anionenaustauschers mit Dimethylaminomethylgruppen = Typ I

Bei Raumtemperatur werden zu 1330 ml aminomethyliertem Perlpolymerisat aus Beispiel 1c) 1995 ml vollentsalztes Wasser und 627 g 29,8 gew.-%ige Formalinlösung hinzudosiert. Der Ansatz wird auf 40°C erwärmt. Anschließend wird in 2 Stunden auf 97°C erwärmt. Hierbei werden insgesamt 337 g 85 gew.-%ige Ameisensäure hinzudosiert.Anschließend wird der pH Wert mit 50 gew.-%iger Schwefelsäure innerhalb von 1 Stunde auf pH 1 eingestellt. Bei pH 1 wird 10 Stunden nachgerührt. Nach dem Abkühlen wird das Harz mit vollentsalztem Wasser gewaschen und mit Natronlauge von Sulfat befreit und in die OH-Form überführt.
Ausbeute an Harz mit Dimethylaminogruppen : 1440 ml
Als Gesamtausbeute - hochgerechnet - ergeben sich 1703 ml
Das Produkt enthält 2,00 mol / Liter Harz Dimethylaminogruppen.
Die Gesamtmenge an Dimethylaminogruppen in mol in der Gesamtausbeute an Produkt mit Dimethylaminogruppen beträgt 3,406.

### Beispiel 2

Herstellung eines monodispersen mittelstarkbasischen makroporösen Anionenaustauschers mit Dimethylaminomethylgruppen sowie Trimethylaminomethylgruppen = Typ I
Bei Raumtemperatur werden 1220 ml Dimethylaminomethylgruppen tragendes Perlpolymerisat aus Beispiel 1d), 1342 ml vollentsalztes Wasser und 30,8 g Chlormethan vorgelegt. Der Ansatz wird auf 40°C erwärmt und 6 Stunden bei dieser Temperatur gerührt.
Ausbeute an Dimethylaminomethylgruppen - sowie Trimethylaminomethylgruppen tragendem Harz : 1670 ml
Als Gesamtausbeute hochgerechnet ergeben sich 2331 ml.
Von den Stickstoffatom-tragenden Gruppen des Produktes liegen 24,8 % als Trimethylaminomethylgruppen und 75,2 % als Dimethylaminomethylgruppen vor.

Die nutzbare Kapazität des Produktes beträgt: 1,12 mol/ Liter Harz.
Stabilität des Harzes im Originalzustand: 98 perfekte Perlen von 100
Stabilität des Harzes nach dem Walztest: 96 perfekte Perlen von 100
Stabilität des Harzes nach dem Quellungsstabilitätstest: 98 perfekte Perlen von 100
94 Volumenprozent der Perlen des Endproduktes besitzen eine Größe zwischen 0,52 und 0,65 mm.

### Beispiel 3

Herstellung eines monodispersen starkbasischen makroporösen Anionenaustauschers mit Hydroxyethyldimethylaminomethylgruppen = Typ II
1230 ml des nach Beispiel 1d) hergestellten Harzes mit Dimethylaminomethylgruppen sowie 660 ml vollentsalztes Wasser werden vorgelegt. Dazu werden in 10 Minuten 230,5 g 2- Chlorethanol dosiert. Der Ansatz wird auf 55°C erhitzt. Durch Zupumpen von 20 gew.-%iger Natronlauge wird ein pH Wert von 9 eingestellt. Es wird 3 Stunden bei pH 9 gerührt, anschließend wird der pH Wert auf 10 mit Natronlauge eingestellt und weitere 4 Stunden bei pH 10 gerührt.Nach dem Abkühlen wird das Produkt in einer Säule mit vollentsalztem Wasser gewaschen, und dann werden 3 Bettvolumen 3 gew.-%iger Salzsäure überfiltriert.
Ausbeute : 1980 ml
Die nutzbare Kapazität des Produktes beträgt: 0,70 mol/ Liter Harz.
Stabilität des Harzes im Originalzustand: 96 perfekte Perlen von 100
Stabilität des Harzes nach dem Walztest: 70 perfekte Perlen von 100
Stabilität des Harzes nach dem Quellungsstabilitätstest: 94 perfekte Perlen von 100
94 Volumenprozent der Perlen des Endproduktes besitzen eine Größe zwischen 0,52 und 0,65 mm.

### Beispiel 4

Herstellung eines heterodispersen, stark basischen makroporösen Aninonenaustauschers mit Trimethylammoniumgruppen auf Styrol-Divinylbenzolbasis gemäß dem Stand der Technik.

### 4a) Herstellung des Perpolymerisates - Verwendung des Initiators Dibenzoylperoxid

In einem Polymerisationsreaktor werden bei Raumtemperatur 1112 ml voll entsalztes Wasser, 150 ml einer 2 gew.-%igen wässrigen Lösung von Methylhydroxyethylcellulose sowie 7,5 Gramm Dinatriumhydrogenphosphat x 12 H₂O vorgelegt. Die gesamte Lösung wird eine Stunde bei Raumtemperatur gerührt. Anschließend gibt man die Monomermischung bestehend aus 59,61 g Divinylbenzol 80,53 gew.-%ig, 900,39 g Styrol, 576 g Isododekan und 7,70 g Dibenzoylperoxid 75 gew.-%ig zu. Der Ansatz bleibt zunächst 20 Minuten bei Raumtemperatur stehen und wird dann 30 Minuten bei Raumtemperatur bei einer Rührgeschwindigkeit von 200 UpM gerührt. Der Ansatz wird auf 70°C erhitzt, weitere 7 Stunden bei 70°C gerührt, dann auf 95°C erhitzt und weitere 2 Stunden bei 95°C gerührt. Nach dem Abkühlen wird das erhaltene Perlpolymerisat abfiltriert und mit Wasser gewaschen und bei 80°C 48 Stunden getrocknet.

Der Durchmesser der Perlen liegt im Bereich 0,32 bis 0,71 mm.

### 4b) Herstellung des amidomethylierten Perlpolymerisates

Bei Raumtemperatur werden 1331 ml 1,2-Dichlorethan, 493,9 g Phthalimid und 347,4 g 29,6 gew.-%iges Formalin vorgelegt. Der pH-Wert der Suspension wird mit Natronlauge auf 5,5 bis 6 eingestellt. Anschließend wird das Wasser destillativ entfernt. Dann werden 36,2 g Schwefelsäure zudosiert. Das entstehende Wasser wird destillativ entfernt. Der Ansatz wird abgekühlt. Bei 30°C wird 132,3 g 65 %iges Oleum zudosiert, anschließend 317,1 g heterodisperses Perlpolymerisat gemäß Verfahrensschritt 4a). Die Suspension wird auf 70°C erhitzt und weitere 6,5 Stunden bei dieser Temperatur gerührt. Die Reaktionsbrühe wird abgezogen, voll entsalztes Wasser wird zudosiert und Restmengen an Dichlorethan werden destillativ entfernt.
Ausbeute an amidomethyliertem Perlpolymerisat : 1410 ml
Elementaranalytische Zusammensetzung: Kohlenstoff: 76,8 Gew.-%; Wasserstoff: 5,0 Gew.-%; Stickstoff: 5,4 Gew.-%.

### 4c) Herstellung des aminomethylierten Perlpolymerisates

Zu 1385 ml amidomethyliertem Perlpolymerisat aus Beispiel 4b) werden 1515,75 g 24,32 gew.-*%*ige Natronlauge bei Raumtemperatur hinzudosiert. Die Suspension wird in 2 Stunden auf 180°C erhitzt und weitere 8 Stunden bei dieser Temperatur gerührt.

Das erhaltene Perlpolymerisat wird mit voll entsalztem Wasser gewaschen.

Ausbeute an aminomethyliertem Perlpolymerisat: 1200 ml

Elementaranalytische Zusammensetzung: Kohlenstoff: 79,3 Gew.-%; Stickstoff: 11,2 Gew.-%; Wasserstoff: 8,4 Gew.-%; Rest Sauerstoff.
Gehalt des Harzes an Aminomethylgruppen: 2,34 mol/l
Im statistischen Mittel wurden pro aromatischem Kern - herrührend aus den Styrol und Divinylbenzoleinheiten - 1,17 Wasserstoffatome durch Aminomethylgruppen ersetzt.

### 4d) Herstellung des heterodispersen, stark basischen, makroporösen Anionenaustauschers mit Trimethylammoniumgruppen

In einem Autoklav werden in 1950 ml voll entsalztes Wasser 1160 ml aminomethyliertes Perlpolymerisat aus Beispiel 4c) bei Raumtemperatur eingetragen. Es werden 501,6 g Chlormethan dosiert und die Suspension auf 40°C erwärmt. Bei 40°C wird die Suspension weitere 16 Stunden mit einer Rührgeschwindigkeit von 200 UpM gerührt. Der Autoklav wird abgekühlt und entspannt. Das Harz wird über ein Sieb abfiltriert, mit Wasser gewaschen und in eine Säule überführt. Unter Wirbeln werden 200 ml 5 gew.-%ige wässrige Natriumchloridlösung dosiert. Anschließend wird das Harz zur Entfernung löslicher und fester Bestandteile klassiert.
Volumenausbeute: 1620 ml
Stabilität des Harzes im Originalzustand: 99 % ganze Perlen
Stabilität des Harzes nach dem Walztest: 96 % ganze Perlen
Stabilität des Harzes nach dem Quellungsstabilitätstest: 98 % ganze Perlen

Der Durchmesser der Perlen liegt im Bereich 0,35 bis 0,85 mm.

### Beispiel 5

Herstellung eines **monodispersen,** starkbasischen makroporösen Anionenaustauschers mit Trimethylammoniumgruppen auf Styrol-Divinylbenzolbasis
In einem Reaktor werden 1513 ml voll entsalztes Wasser vorgelegt. Dazu werden 900 ml aminomethyliertes Perlpolymerisat aus Beispiel 1c) sowie 263 ml 50 gew.-%ige Natronlauge bei Raumtemperatur dosiert. Anschließend werden 357 g Chlormethan dosiert und die Suspension auf 40°C erwärmt. Bei 40°C wird die Suspension 16 Stunden lang gerührt und anschließend auf Raumtemperatur abgekühlt.
Die Suspension wird auf ein Sieb gegeben und anschließend mit voll entsalztem Wasser gewaschen. Danach wird der Anionenaustauscher in eine Glasfrittensäule gefüllt. Es werden 1500 ml 3 gew.-%iger wässriger HCl überfiltriert. Danach wird der Anionenaustauscher zur Entfernung fester und gelöster Partikel mit Wasser klassiert.
Volumenausbeute: 1560 ml
Stabilität des Harzes im Originalzustand: 99 % ganze Perlen
Stabilität des Harzes nach dem Walztest: 97 % ganze Perlen

Der Durchmesser der Perlen liegt im Bereich 0,57 bis 0,67 mm.

### Beispiel 6

Bestimmung der Aufnahmefähigkeit eines **heterodispersen**, stark basischen makroporösen Anionenaustauschers mit Trimethylammoniumgruppen auf Styrol-Divinylbenzolbasis
In einer Polyethylenflasche werden 500 g einer Zink(II)chloridlösung, die mit Salzsäure auf pH 1 eingestellt wurde, vorgelegt. Die Lösung enthält 4,2 g Zink pro Liter Lösung. Zu der Lösung werden 10 ml eines **heterodispersen**, stark basischen makroporösen Anionenaustauschers mit Trimethylammoniumgruppen auf Styrol-Divinylbenzolbasis dosiert. 24 Stunden lang wird bei Raumtemperatur gerührt.
Nach 5 Stunden und 24 Stunden werden Proben gezogen und auf ihren Zinkgehalt hin analysiert.
Probe gezogen nach 5 Stunden: Zinkgehalt 4,2 g Zink pro Liter Lösung - bezogen auf die Anfangskonzentrationen wurden 0 % Zink aufgenommen.
Probe gezogen nach 24 Stunden: Zinkgehalt 4,1 g Zink pro Liter Lösung - bezogen auf die Anfangskonzentration wurden 2,5 % Zink aufgenommen.

### Beispiel 7

Bestimmung der Aufnahmefähigkeit eines **monodispersen**, stark basischen makroporösen Anionenaustauschers mit Trimethylammoniumgruppen auf Styrol-Divinylbenzolbasis
In einer Polyethylenflasche werden 500 g einer Zink(II)chloridlösung, die mit Salzsäure auf pH 1 eingestellt wurde, vorgelegt. Die Lösung enthält 4,2 g Zink pro Liter Lösung.
Zu der Lösung werden 10 ml eines **monodispersen**, stark basischen makroporösen Anionenaustauschers mit Trimethylammoniumgruppen auf Styrol - Divinylbenzlbasis dosiert. 24 Stunden lang wird bei Raumtemperatur gerührt.
Nach 5 Stunden und 24 Stunden werden Proben gezogen und auf ihren Zinkgehalt hin analysiert.
Probe gezogen nach 5 Stunden: Zinkgehalt 3,5 g Zink pro Liter Lösung - bezogen auf die Anfangskonzentration wurden 16,7 % Zink aufgenommen.
Probe gezogen nach 24 Stunden: Zinkgehalt 3,3 g Zink pro Liter Lösung - bezogen auf die Anfangskonzentration wurden 26,7 % Zink aufgenommen.

### Untersuchungsmethoden:

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Stabilität des Harzes nach dem Walztest

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Nach dem Walzen werden an repräsentativen Mustern an 100 Perlen durch Auszählen unter dem Mikroskop die Anzahl der unversehrten Perlen ermittelt.

### Quellungsstabilitätstest

In eine Säule werden 25 ml Anionenaustauscher in der Chloridform eingefüllt. Nacheinander werden 4 gew.-%ige wässrige Natronlauge, vollentsalztes Wasser, 6 gew.-%ige Salzsäure und nochmals voll entsalztes Wasser in die Säule gegeben, wobei die Natronlauge und die Salzsäure von oben durch das Harz fließen und das Edelwasser von unten durch das Harz gepumpt wird. Die Behandlung erfolgt zeitgetaktet über ein Steuergerät. Ein Arbeitszyklus dauert 1h. Es werden 20 Arbeitszyklen durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

### Nutzbare Kapazität von stark basischen und mittelstark basischen Anionenaustauschern

1000 ml Anionenaustauscher in der Chloridform, d.h. das Stickstoffatom trägt als Gegenion Chlorid, werden in eine Glassäule gefüllt. 2500 ml 4 gew.-%ige Natronlauge werden über das Harz in 1 Stunde filtriert. Anschließend wird mit 2 Litern entbastem d.h. entkationisiertem Wasser gewaschen. Dann wird über das Harz mit einer Geschwindigkeit von 10 Litern pro Stunde Wasser mit einer Gesamtanionenhärte von 25 Grad deutscher Härte filtriert. Im Eluat werden die Härte sowie die Restmenge an Kieselsäure analysiert. Bei einem Rest-Kieselsäuregehalt von ≥ 0,1 mg/l ist die Beladung beendet.

Aus der Menge Wasser, die über das Harz filtriert wird, der Gesamtanionenhärte des überfiltrierten Wassers sowie der Menge an eingebautem Harz wird ermittelt wieviel Gramm CaO pro Liter Harz aufgenommen werden. Die Grammenge an CaO stellt die nutzbare Kapazität des Harzes in der Einheit Gramm CaO pro Liter Anionenaustauscher dar.

### Volumenspiel Chlorid / OH - Form

100 ml basische Gruppen tragender Anionenaustauscher werden mit vollentsalztem Wasser in eine Glassäule gespült.Es werden in 1 Stunde und 40 Minuten 1000 ml 3 gew.-%ige Salzsäure überfiltriert. Anschließend wird das Harz mit vollentsalztem Wasser chloridfrei gewaschen. Das Harz wird in ein Stampfvolumeter unter vollentsalztem Wasser gespült und bis zur Volumenkonstanz eingerüttelt - Volumen V 1 des Harzes in der Chloridform.

Das Harz wird wiederum in die Säule überführt. Es werden 1000 ml 2 gew.-%ige Natronlauge überfiltriert. Anschließend wird das Harz mit vollentsalztem Wasser bis auf einen pH Wert von 8 im Eluat alkalifrei gewaschen. Das Harz wird in ein Stampfvolumeter unter vollentsalztem Wasser gespült und bis zur Volumenkonstanz eingerüttelt - Volumen V2 des Harzes in der freien Basenform - (OH - Form).
Berechnung : V1 - V2 = V3
V3 : V1/100 = Quellungsspiel Chlorid / OH - Form in %

### Bestimmung der Menge an basischen Aminomethylgruppen im aminomethylierten, vernetzten Polystyrol Perlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: (200 - V) · 20 = mol Aminomethylgruppen pro Liter Harz.

### Bestimmung des Substitutionsgrades der aromatischen Kerne des vernetzten Perlpolymerisates durch Aminomethylgruppen

Die Menge Aminomethylgruppen in der Gesamtmenge des aminomethylierten Harzes wird nach obiger Methode bestimmt.

Aus der Menge an eingesetztem Perlpolymerisat - A in Gramm - wird durch Division mit dem Molekulargewicht die in dieser Menge vorliegende Molmenge an Aromaten errechnet.

Beispielsweise werden aus 300 Gramm Perlpolymerisat 950 ml aminomethyliertes Perlpolymerisat hergestellt mit einer Menge von 1,8 mol/l Aminomethylgruppen.

950 ml aminomethyliertes Perlpolymerisat enthalten 2,82 mol Aromaten.

Pro Aromat liegen dann 1,8 / 2,81 = 0,64 mol Aminomethylgruppen vor.

Der Substitutionsgrad der aromatischen Kerne des vernetzten Perlpolymerisates durch Aminomethylgruppen beträgt 0,64.

## Patentansprüche

1. Verwendung monodisperser, makroporöser Anionenaustauscher vom Typ I oder Typ II zur Gewinnung von Wertmetallen und Typ I für Harze steht, deren adsorbierende Zentren quaternäre Ammoniumgruppen sind, die durch Alkylgruppen, bevorzugt C₁-C₄-Alkylgruppen, substituiert sind und Typ II für Harze steht, worin die quaternären Ammoniumgruppen neben Alkylgruppe(n) mindestens eine Hydroxyalkylgruppe, bevorzugt Hydroxy-C₁-C₄-alkylgruppe aufweisen.

2. Verwendung gemäß Anspruch 1, **dadurch gekennzeichnet, dass** die Wertmetalle der III. bis VI. Hauptgruppe sowie der 5. bis 12. Nebengruppe des Periodensystems der Elemente angehören.

3. Verwendung gemäß Anspruch 2, **dadurch gekennzeichnet, dass** es sich bei dem Wertmetall um Uran handelt.

4. Verwendung gemäß der Ansprüche 1 bis 3, **dadurch gekennzeichnet, dass** die monodispersen makroporösen Anionenaustauscher in Resin in Pulp- oder bei in-situ-leach-Prozessen oder beim Aufarbeiten Wertmetall-haltiger Wässer zum Einsatz kommen.

5. Verwendung gemäß Anspruch 3, **dadurch gekennzeichnet, dass** das Uran als Uranylchlorid, Uranylphosphat, Uranylacetat, Uranylcarbonat, Uranylsulfat oder Uranylnitrat vorliegt.

6. Verfahren zur Gewinnung von Wertmetallen nach dem Resin-in-pulp oder dem in-situ-leach Verfahren oder aus Wertmetall-haltigen Wässern, **dadurch gekennzeichnet, dass** monodisperse, makroporöse Anionenautauscher vom Typ I oder Typ II, bevorzugt vom Typ II, eingesetzt werden und Typ I für Harze steht, deren adsorbierende Zentren quaternäre Ammoniumgruppen sind, die durch Alkylgruppen, bevorzugt C₁-C₄-Alkylgruppen, substituiert sind und Typ II für Harze steht, worin die quaternären Ammoniumgruppen neben Alkylgruppe(n) mindestens eine Hydroxyalkylgruppe, bevorzugt Hydroxy-C₁-C₄-alkylgruppe aufweisen.

7. Verfahren gemäß Anspruch 6, **dadurch gekennzeichnet, dass** die Anionenaustauscher vom Typ II mit tertiären Aminen, bevorzugt Dimethylethanolamin oder Dimethylmethanolamin, funktionalisiert wurden.

8. Verfahren gemäß der Ansprüche 6 oder 7, **dadurch gekennzeichnet, dass** Wertmetalle der III. bis VI. Hauptgruppe sowie der 5. bis 12. Nebengruppe des Periodensystems der Elemente gewonnen werden.

9. Verfahren gemäß Anspruch 8, **dadurch gekennzeichnet, dass** als Wertmetall Uran gewonnen wird.
